(19) Europäisches Patentamt
European Patent Office
Office européen des brevets

(11) **EP 3 223 192 A2**

(12) **EUROPEAN PATENT APPLICATION**

(43) Date of publication:
27.09.2017 Bulletin 2017/39

(51) Int Cl.:
*G06K 9/00* (2006.01)

(21) Application number: 17159308.0

(22) Date of filing: 06.03.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 24.03.2016 JP 2016060901

(71) Applicant: Canon Kabushiki Kaisha
Tokyo, Tokyo 146-8501 (JP)

(72) Inventor: YAMAMOTO, Shinji
Tokyo, Tokyo 146-8501 (JP)

(74) Representative: TBK
Bavariaring 4-6
80336 München (DE)

(54) **VIDEO PROCESSING APPARATUS AND CONTROL METHOD**

(57) A video processing apparatus obtains videos obtained from a plurality of image capture apparatuses, and extracts a predetermined attribute from the obtained videos. The video processing apparatus calculates individual attribute frequency information indicating a frequency at which an attribute has been extracted for a video obtained by each of a plurality of image capture apparatuses and overall attribute frequency information indicating a frequency at which an attribute has been extracted for a plurality of videos obtained by a plurality of image capture apparatuses, and outputs the individual attribute frequency information and the overall attribute frequency information.

F I G. 2

EP 3 223 192 A2

**Description**

BACKGROUND OF THE INVENTION

Field of the Invention

The present invention relates to a video processing apparatus for processing video shot with a plurality of cameras, and control methods thereof.

Description of the Related Art

In recent years, video analysis techniques have improved, and along with that, systems for extracting object attribute information from video from a plurality of cameras installed urban areas, and examining and analyzing the video of the cameras based on the attribute information have been proposed. However, the obtained attribute information often depends on the angle of view and the installation position of the cameras.

Meanwhile, methods for adjusting parameters for attribute extraction and methods for adjusting the angle of view of cameras, in order to accurately examine and analyze video, have been proposed. Japanese Patent Laid-Open No. 2012-252507 (Patent Literature 1) proposes a system in which a parameter generated using learning data that is within a predetermined distance from attribute information obtained from video is used as an estimation parameter for estimating attributes (age and gender) of a person in the image. Also, Japanese Patent Laid-Open No. 2014-064083 (Patent Literature 2) proposes a system in which an angle of view at which face detection is easier is calculated based on a detection result obtained from video, and the angle of view of the camera is automatically corrected.

However, the configurations described in Patent Literature 1 and Patent Literature 2 are directed to images from a single camera and the angle of view of a single camera, and a case where there are a plurality of cameras is not taken into consideration. Therefore, if a large number of cameras are installed, it is necessary to check which type of analysis each of the cameras is suitable for, increasing the burden on the user.

SUMMARY OF THE INVENTION

According to one embodiment of the present invention, a video processing apparatus, a video processing system and control methods thereof that reduce the burden on the user related to the setting of an image capture apparatus or the setting of an analysis function when using a plurality of cameras are disclosed.

The present invention in its first aspect provides a video processing apparatus as specified in claims 1 to 14.

The present invention in its second aspect provides a control method of a video processing apparatus as specified in claims 15 to 17.

The present invention in its third aspect provides a computer program as specified in claim 18.

Further features of the present invention will become apparent from the following description of exemplary embodiments (with reference to the attached drawings).

BRIEF DESCRIPTION OF THE DRAWINGS

Fig. 1 is a diagram showing a network connection in a video processing system of a first embodiment.
Fig. 2 is a block diagram showing an example of a functional configuration of the first embodiment.
Figs. 3A and 3B are diagrams illustrating selection of image capture apparatuses according to the first embodiment.
Figs. 3C and 3D are diagrams showing an example in which attribute frequency information is shown on a graph.
Figs. 4A and 4B are diagrams showing examples of a user interface of the first embodiment.
Fig. 5 is a flowchart showing processing of the first embodiment.
Fig. 6 is a flowchart showing processing of the first embodiment.
Fig. 7 is a flowchart showing processing of the first embodiment.
Fig. 8 is a block diagram showing an example of the functional configuration of a second embodiment.
Fig. 9A is a diagram showing an example of a user interface of the second embodiment.
Fig. 9B is a diagram showing a configuration example of necessary attribute data.
Fig. 10 is a flowchart showing processing of the second embodiment.
Fig. 11 is a block diagram showing an example of the functional configuration of a third embodiment.
Fig. 12A is a diagram showing an example of a user interface of the third embodiment.
Fig. 12B is a diagram showing an example of the data configuration of optimum-angle-of-view data.

Fig. 12C is a diagram illustrating recommendation registration data.

Fig. 13 is a diagram showing an example in which there is deviation in attribute frequency information among selected image capture apparatuses.

Figs. 14A to 14C are diagrams showing an example of the user interface of the third embodiment.

Fig. 15 is a flowchart showing processing of the third embodiment.

Fig. 16 is a block diagram showing an example of the hardware configuration of a video processing system.

DESCRIPTION OF THE EMBODIMENTS

The present invention will be described below in detail based on preferred embodiments thereof with reference to the accompanying drawings. Note that the configurations shown in the following embodiments are merely examples, and the present invention is not limited to the illustrated configurations.

First Embodiment

In a first embodiment, a case where attribute information obtained from a plurality of image capture apparatuses or videos is analyzed, and information regarding a frequency at which attributes are obtained (hereinafter, attribute frequency information) is output will be described.

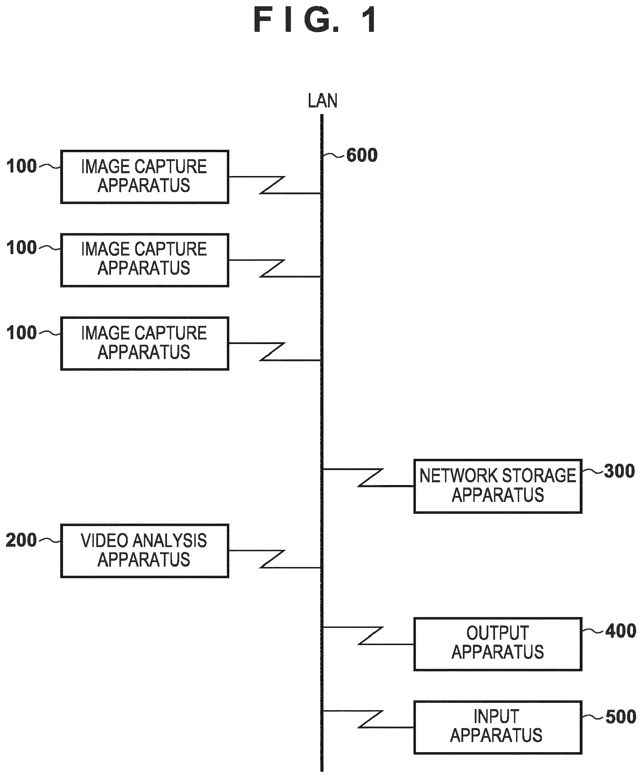

Fig. 1 is a configuration diagram showing an example of the network configuration of a video processing system according to the first embodiment. In Fig. 1, reference numeral 100 indicates an image capture apparatus such as a network camera. In this embodiment, a plurality of image capture apparatuses 100 are connected to a network (LAN 600). Reference numeral 200 denotes a video analysis apparatus, which collects video data shot with a plurality of image capture apparatuses 100 that have been installed, and performs a video analysis process. The video analysis process includes a function for performing face authentication for authenticating a face by extracting a feature amount from a face region of a person and performing matching, for example. In addition, the video analysis apparatus 200 may collect previous video data recorded in a network storage apparatus 300 and analysis data that is a result of analyzing the video, and perform a video analysis process.

Reference numeral 300 denotes a network storage apparatus as a storage apparatus, in which video data shot with the image capture apparatus 100 and analysis data that is a result of the video analysis apparatus 200 performing video analysis are recorded via the LAN 600. Reference numeral 400 indicates a display device, which displays analysis data through a user interface, for example. In addition, the output apparatus 400 displays the analysis result (analysis data) so as to be superimposed on the video data recorded in the network storage apparatus 300 and/or layout information of the camera, for example. Reference numeral 500 indicates an input apparatus, which has a function for operating analysis processing, such as a mouse, a keyboard and a touch panel.

Note that it suffices that the number of image capture apparatuses 100 is two or more. Furthermore, the number of video analysis apparatuses 200, network storage apparatuses 300 and output apparatuses 400 connected to the LAN 600 are not limited to the configuration illustrated in Fig. 1, and there may be a plurality of apparatuses as long as identification is possible using addresses or the like. Moreover, in this embodiment, the output apparatus 400 and the input apparatus 500 are assumed to be an information processing apparatus such as a personal computer (PC) or a tablet terminal. Therefore, the output apparatus 400 and the input apparatus 500 may be integrated. Also, the video analysis apparatus 200, the output apparatus 400 and the input apparatus 500 may be integrated. In addition, the connection form of the output apparatus 400 and the input apparatus 500 to the LAN 600 may be wired or wireless, for example. Accordingly, it suffices that the form of the connection to the LAN 600 is based on a protocol, and the physical form is not limited.

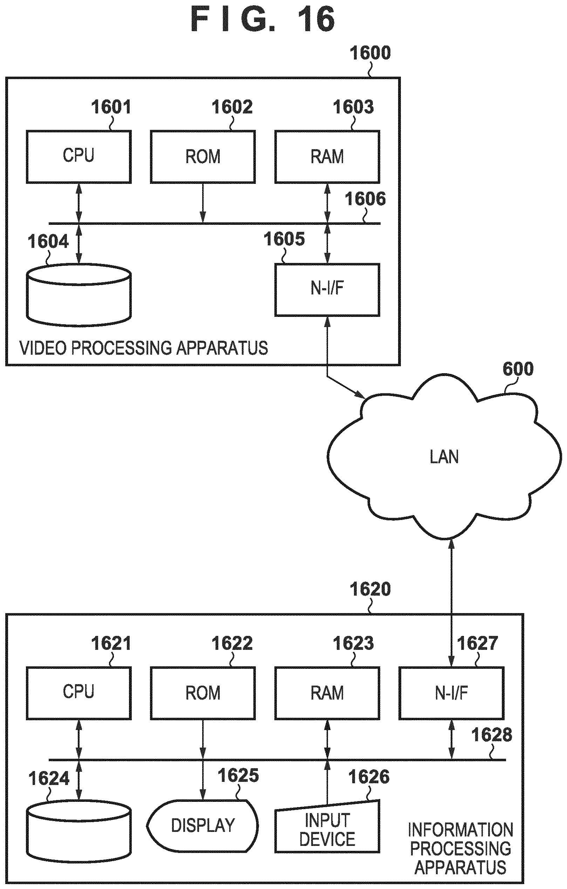

Fig. 16 is a block diagram showing an example of the hardware configuration for realizing the video analysis apparatus 200, the output apparatus 400 and the input apparatus 500. In Fig. 16, the video analysis apparatus 200 is realized by a video processing apparatus 1600. In the video processing apparatus 1600, a CPU 1601 realizes various types of processing, which will be described later, by executing programs. A ROM 1602 is a read-only memory that stores the programs that are executed by the CPU 1601 and various types of data. A RAM 1603 is a memory that is writable and readable at any time, and is used as a work memory of the CPU 1601. A secondary storage apparatus 1604 is constituted by a hard disk, for example, and stores various programs that are executed by the CPU 1601, a video from the image capture apparatus 100, and the like. The programs stored in the secondary storage apparatus 1604 are loaded on the RAM 1603 as necessary, and are executed by the CPU 1601. Note that the network storage apparatus 300 may be realized using the secondary storage apparatus 1604. A network interface 1605 is an interface for connecting to the LAN 600. The above-described constituent elements are connected using a bus 1606 so as to be able to communicate with each other.

In an information processing apparatus 1620, a CPU 1621 realizes various types of processing including provision of a user interface, which will be described later, by executing programs. A ROM 1622 is a read-only memory that stores the programs that are executed by the CPU 1621 and various types of data. A RAM 1623 is a memory that is writable and readable at any time, and is used as a work memory of the CPU 1621. A secondary storage apparatus 1624 is constituted by a hard disk, for example, and stores various programs that are executed by the CPU 1621, a video obtained by the image capture apparatus 100, and the like. The programs stored in the secondary storage apparatus 1624 are loaded to the RAM 1623 as necessary, and are executed by the CPU 1621. Note that the network storage apparatus 300 may be realized using the secondary storage apparatus 1624. A display 1625 displays a user interface screen, which will be described later, under the control of the CPU 1621. An input device 1626 is constituted by a keyboard, a pointing device (mouse) and the like, and receives instructions of the user. A network interface 1627 is an interface for connecting to the LAN 600. A touch panel provided on the screen of the display 1625 may be used as the input device 1626. The above-described constituent elements are connected using a bus 1628 so as to be able to communicate with each other. In this embodiment, the output apparatus 400 and the input apparatus 500 are realized by the display 1625 and the input device 1626 of the information processing apparatus 1620.

The video processing system of this embodiment is constituted mainly by the video processing apparatus 1600 and the information processing apparatus 1620 being connected to each other via the LAN 600. Note that the information processing apparatus 1620 and the video processing apparatus 1600 do not need to be separate bodies.

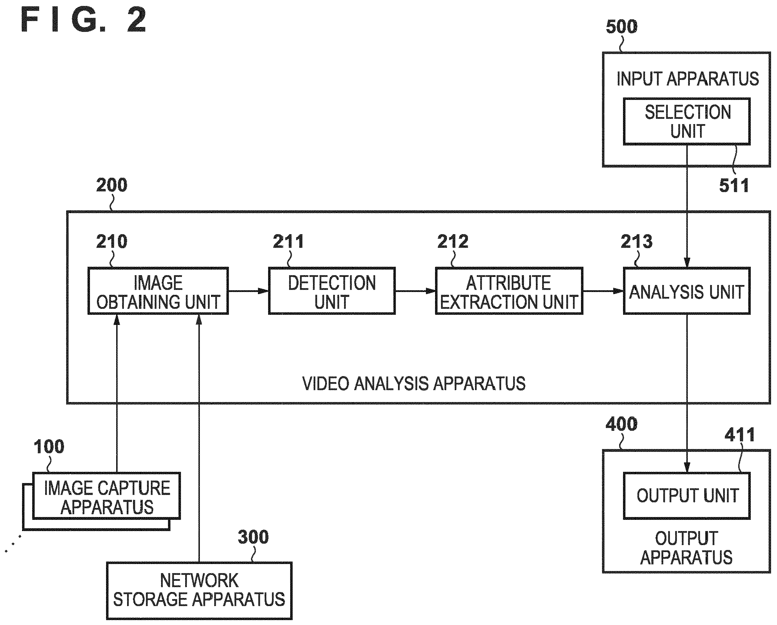

Fig. 2 is a block diagram showing an example of a functional configuration related to analysis of attribute information in the video processing system of the first embodiment. In Fig. 2, an image obtaining unit 210, a detection unit 211, an attribute extraction unit 212 and an analysis unit 213 are functions realized by the video analysis apparatus 200. Also, an output unit 411 is a function realized by the output apparatus 400, and a selection unit 511 is a function realized by the input apparatus 500. However, the detection unit 211, the attribute extraction unit 212 and the analysis unit 213 may be realized on the image capture apparatus 100, and the division of the apparatuses that realize the functions is not limited to the illustrated example.

The image obtaining unit 210 sequentially obtains images from the image capture apparatus 100 via the LAN 600 at a predetermined time interval, and provides image information to the detection unit 211. Note that obtaining of images by the image obtaining unit 210 is not limited to input of captured images from the image capture apparatus 100. For example, images may be input by reading video data (recorded video) from the network storage apparatus 300, streaming input via a network, and the like.

The detection unit 211 performs detection processing for detecting a target (object) from images obtained by the image obtaining unit 210. The detection unit 211 provides, to the attribute extraction unit 212, an ID, position coordinates and size information related to the target detected by performing detection processing, collectively as detection information. Note that detection of a target from an image can be realized using a known technique, and, for example, a method for detecting a whole body of a person described in "Dalal and Triggs. Histograms of Oriented Gradients for Human Detection. Proceedings of the IEEE Conference on Computer Vision and Pattern Recognition (2005)" (Non-patent Literature 1) can be used.

The attribute extraction unit 212 extracts attributes of a target using an image obtained from the image obtaining unit 210 and detection information obtained from the detection unit 211, generates attribute information, and provides the generated attribute information to the analysis unit 213. The attribute information is information such as age, gender, presence or absence of eyeglasses, presence or absence of a mustache/beard, hairstyle, body type, clothing, presence or absence of a bag, hair color, color of clothing and height. Clothing represents the type of clothes such as a coat and a T-shirt. Such information can be detected by a known technique.

An example of a method for extracting age, gender, presence or absence of eyeglasses and presence or absence of a mustache/beard that constitute a portion of the above-described attribute information will be described. First, the position of a part of a face in an image is specified using a known technique (for example, a method for detecting a face and a method for detecting a facial organ described in "X Zhu, D Ramanan. Face detection, pose estimation, and landmark localization in the wild. Computer Vision and Pattern Recognition (CVPR), 2012." (Non-patent Literature 2)). Age, gender, presence or absence of eyeglasses and presence or absence of a mustache/beard are then obtained by comparing the characteristic amount of the specified part of the face with the characteristic amount of learning data learned in advance using machine learning of a known technique. In addition, accuracy information is obtained based on the distance between the characteristic amounts when compared.

Next, an example of a method for extracting a body type, clothing and presence or absence of a bag that constitute a portion of the attribute information will be described. For example, a characteristic amount is calculated by specifying the region of a whole body that exists in an image by performing the whole body detection processing of Non-patent Literature 1, and processing the specified region of the whole body with a Gabor filter. Body type information and clothing information are then obtained using the calculated characteristic amount and an identification device such as a Support Vector Machine. Moreover, accuracy information is obtained based on the distance between the characteristic amounts when the characteristic amounts are compared.

Next, an example of a method for extracting hair color and clothing color that constitute a portion of the attribute information will be described. First, the region of each part of a whole body is specified by applying the processing of Non-patent Literature 1 to each part of the body in the image. A color histogram is then obtained for each part. The color histogram of a head region serves as the hair color, and the color histograms of an upper body region and a lower body region serve as the colors of the clothing. At this time, representative color data determined in advance is prepared, and a representative color with the highest similarity may be used as the hair color and the clothing color. The representative color data is a color histogram, and is defined in advance for each of representative colors such as red, blue, green and yellow. Color similarity is obtained using an equation of Bhattacharyya distance based on the calculated color histogram and the color histogram of the representative color data. Also, accuracy information is obtained based on the similarity obtained at this time. Note that the calculated similarity may be used as it is as accuracy information, or information calculated by an equation according to which the higher the similarity is, the higher the accuracy may serve as accuracy information.

Next, an example of a method for extracting a height constituting a portion of the attribute information will be described. First, the region of a whole body in an image is specified by performing the whole body detection processing of Non-patent Literature 1. Height information is then obtained from the ratio of height information of the whole body region to magnification information of the image capture apparatus.

Upon receiving input from the user, the selection unit 511 realized by the input apparatus 500 selects, as analysis targets, the image capture apparatuses 100 or recorded video stored in the network storage apparatus 300. Information regarding videos captured by the selected image capture apparatuses 100 or the selected recorded video is provided to the analysis unit 213. An example of selecting the image capture apparatuses 100 will be described below. Note that input for the selection from the user is performed using the input apparatus 500.

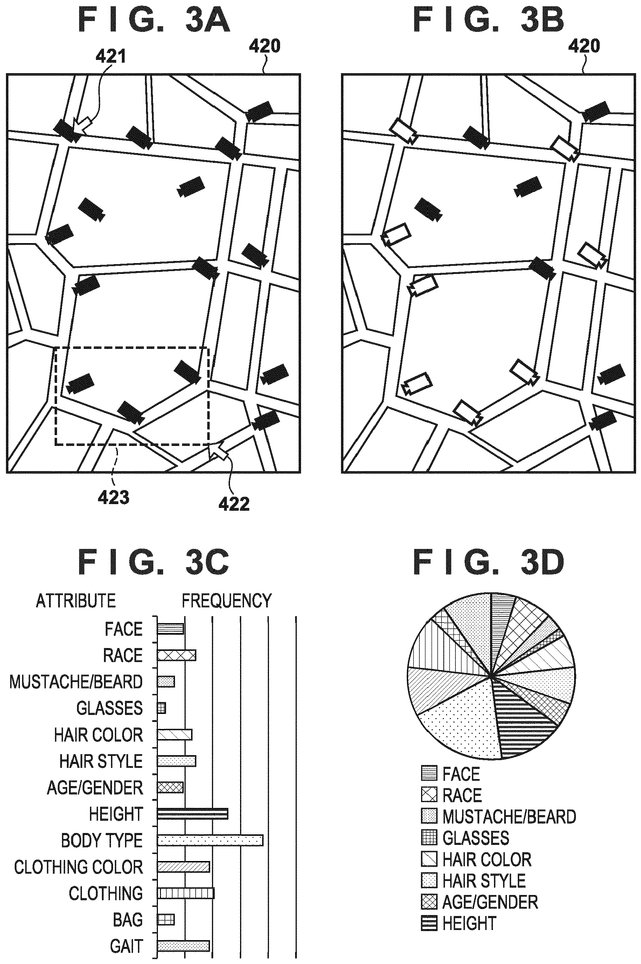

An example of selection processing for selecting image capture apparatuses on which analysis is to be performed will be described. Figs. 3A and 3B show an example of a user interface for selecting image capture apparatuses on which analysis is to be performed. First, the user can select a plurality of image capture apparatuses for which analysis is to be performed, from a list of image capture apparatuses shown in Fig. 3A (in this example, a layout drawing 420 (layout) indicating the layout of image capture apparatuses is displayed). A mouse, a keyboard or a touch panel is used for the selection. For example, one desired image capture apparatus is designated at a time using a mouse cursor 421, and thereby designated image capture apparatuses are selected as analysis targets. Alternatively, for example, image capture apparatuses that exist in a range 423 designated by a range designating operation using a mouse cursor 422 may be selected as analysis targets. The user interface changes the display form of selected network cameras so as to be identifiable by the user. In the example in Fig. 3B, in the layout drawing 420, the selected image capture apparatuses are displayed as outlined blanks, and thereby a display is obtained in which the user can immediately identify the selected image capture apparatuses.

Regarding the image capture apparatuses selected by the selection unit 511, the analysis unit 213 calculates a frequency at which each attribute has been detected, using attribute information obtained by the attribute extraction unit 212, and generates attribute frequency information. The generated attribute frequency information is provided to the output unit 411. The detail of analysis processing performed by the analysis unit 213 (generation of attribute frequency information) will be described below.

First, the analysis unit 213 extracts only attribute information extracted from the image capture apparatuses selected by the selection unit 511 as processing targets. Hereinafter, $C_j$ indicates each image capture apparatus, $A_i$ indicates each piece of attribute information, and $F_k$ indicates each of the frames of continuous video. If the number of connected image capture apparatuses 100 is M, then j is 1 to M, and if the number of attribute items included in the attribute information is N, then i is 1 to N. If the total number of frames of the continuous video is L, then k is 1 to L. Moreover, for example, if an image capture apparatus $C_1$ and an image capture apparatus $C_2$ are selected, and an image capture apparatus $C_3$ is not selected, the attribute information of the image capture apparatus $C_1$ and the attribute information of the image capture apparatus $C_2$ are processed, but the attribute information of the image capture apparatus $C_3$ is not processed. Moreover, the total sum $S(A_i, C_j, F)$ of the number of times that an attribute $A_i$ has been extracted from a video obtained from an image capture apparatus $C_j$ is obtained by:

$$S(A_i, C_j, F) = \Sigma_k S(A_i, C_j, F_k) \quad \dots \quad (1)$$

In Equation 1, if the attribute $A_i$ is obtained from a frame $F_k$ of the image capture apparatus $C_j$, $S(A_i, C_j, F_k)$ is 1, and otherwise $S(A_i, C_j, F_k)$ is 0.

Next, the following equation is calculated as attribute frequency information $R(A_i, C_j, F)$ of the image capture apparatus $C_j$.

$$R(A_i, C_j, F) = S(A_i, C_j, F) / \Sigma_i S(A_i, C_j, F) \quad \dots \quad (2)$$

In Equation 2, the denominator $\Sigma_i S(A_i,C_j,F)$ indicates the total sum of the number of times that attribute information of an attribute $A_1$ to an attribute AN has been obtained from the image capture apparatus $C_j$. Note that the total number of frames L may be used in place of $\Sigma_i S(A_i,C_j,F)$. This calculation is carried out for each image capture apparatus selected from the image capture apparatus $C_1$ to an image capture apparatus $C_M$. As described above, individual attribute frequency information for each image capture apparatus is obtained.

Similarly, attribute frequency information $R(A_i,C,F)$ is calculated from the total sum $S(A_i,C,F)$ of the number of times that the attribute $A_i$ has been extracted regarding all the selected image capture apparatuses. The equations for calculating $R(A_i,C,F)$ and $S(A_i,C,F)$ are respectively as follows.

$$S(A_i,C,F) \;=\; \Sigma_j \Sigma_k S(A_i,C_j,F_k) \quad \dots \quad (3)$$

$$R(A_i,C,F) \;=\; S(A_i,C,F)/\Sigma_i S(A_i,C,F) \quad \dots \quad (4)$$

The denominator $\Sigma_i S(A_i,C,F)$ indicates the total sum of the number of times that attribute information has been obtained from each image capture apparatus regarding all the image capture apparatuses selected as analysis targets, and may be replaced by the total number L of the frames of all the image capture apparatuses. Accordingly, overall attribute frequency information of the selected image capture apparatuses 100 is obtained.

Figs. 3C and 3D are diagrams showing, as a graph, an example of an analysis result of the above-described analysis processing. Fig. 3C shows an analysis result in a bar graph 340 in which the horizontal axis indicates each attribute, and the vertical axis indicates each frequency. The example in Fig. 3C indicates that body type information is an attribute that has been obtained most frequently, and that the number of times that eyeglasses information has been obtained and the number of times that mustache/beard information has been obtained are small. Fig. 3D shows an analysis result in a pie graph 360. The numeral values of the analysis result are the same as those in Fig. 3C. Note that methods for displaying the analysis results displayed as in Figs. 3C and 3D can be applied to both individual attribute frequency information (a result obtained from Equation 2) and overall attribute frequency information (a result obtained from Equation 4).

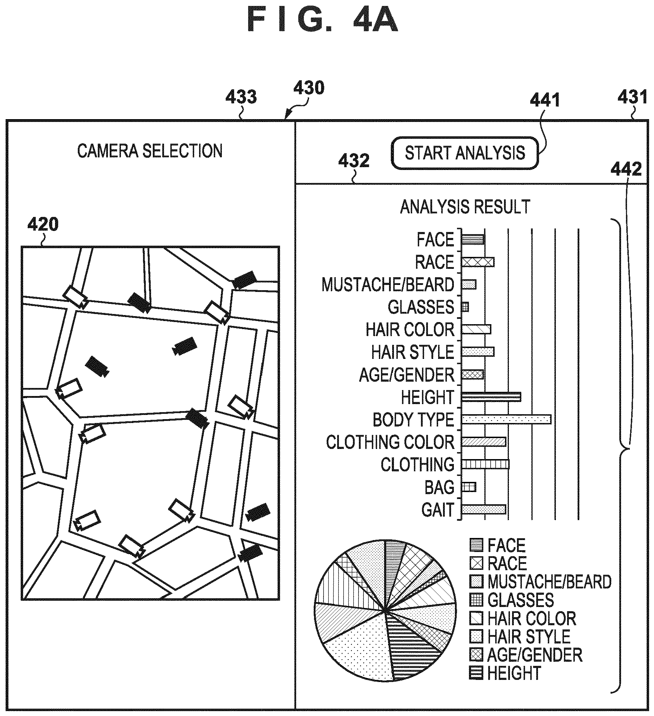

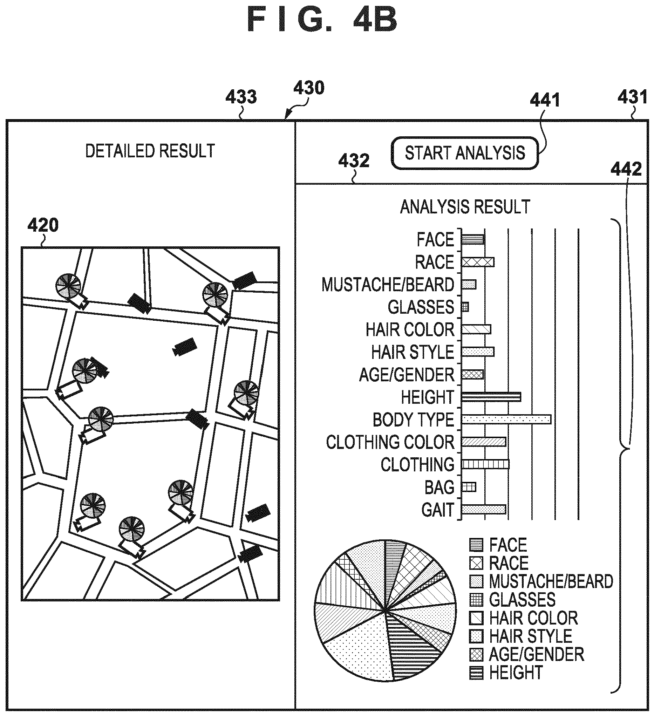

The output unit 411 outputs, to the user through the user interface, the individual attribute frequency information $R(A_i,C_j,F)$ of an image capture apparatus and the overall attribute frequency information $R(A_i,C,F)$, which are analysis results of the analysis unit 213. Figs. 4A and 4B are examples of a user interface screen 430 on which attribute frequency information is output as an analysis result. In a left-side region 433 of the user interface screen 430, the layout drawing 420 (Figs. 3A and 3B) is displayed in which image capture apparatuses are selected using the selection unit 511 and the result of the selection is shown.

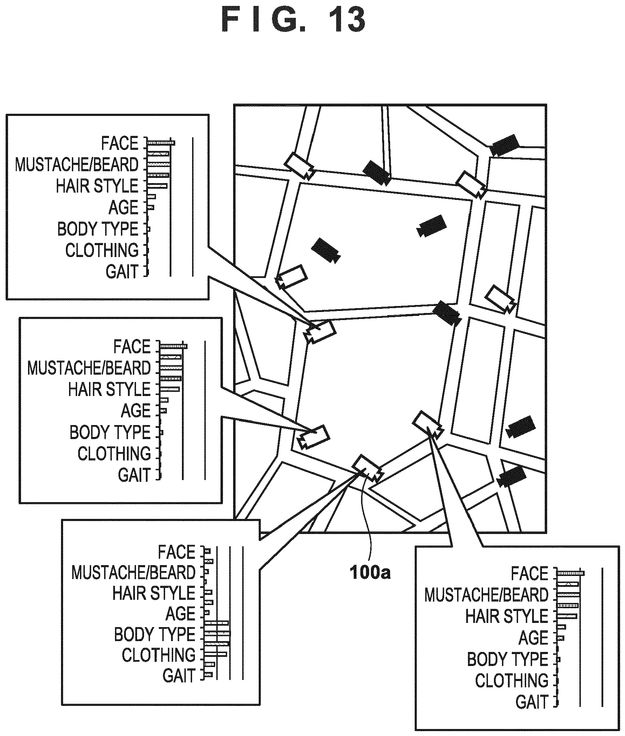

An analysis start button 441 for starting analysis is displayed in an upper right region 431 of the user interface screen 430. In addition, indicated in a lower right region 432 is a display example of attribute frequency information as an analysis result, which is an example in which the analysis result 442 indicated by a bar graph and a pie graph aligned adjacently and having been described with reference to Figs. 3C and 3D is displayed. Note that if image capture apparatuses are designated by the user from the layout drawing 420 displayed in the left-side region 433, individual attribute frequency information regarding the designated image capture apparatuses is displayed as the analysis result 442 in the lower right region 432. On the other hand, if no image capture apparatus is designated, overall attribute frequency information is displayed as the analysis result 442. Note that bar graphs as in Fig. 13, for example, may be used for superimposing and displaying individual attribute frequency information on the layout drawing 420.

Fig. 4B is a diagram showing another example of the user interface screen 430. In Fig. 4B, overall attribute frequency information is displayed as an analysis result 442 in the lower right region 432. In addition, in the layout drawing 420 of the left-side region 433, corresponding individual attribute frequency information is superimposed and displayed as a pie graph in the vicinity of each of the selected image capture apparatuses.

Note that it suffices that detection processing performed by the detection unit 211 is processing for detecting a predetermined target from an image, and specifying the position of the target, and the detection processing is not limited to detection performed using a specific image characteristic amount or an identification device. For example, a characteristic amount to be extracted is not limited to gradient direction histogram characteristics used in Non-patent Literature 1, and Haar-like characteristics, LBPH characteristics (Local Binary Pattern Histogram) and the like or a combination thereof may be used. In addition, an AdaBoost classifier, a Randomized Tree or the like may be used for identification, without limitation to a support vector machine. Moreover, a method for tracking a human body as described in "Benfold, B. Stable multi-target tracking in real-time surveillance video. Computer Vision and Pattern Recognition (CVPR), 2011." (Non-patent Literature 3) may be used. It suffices that the tracking method is processing for tracking, in an image, a target detected from the image, and the tracking method is not limited to the method described in Non-patent Literature 3. For example, Mean-shift tracking, a Kalman Filter, on-line boosting and the like may be used.

Moreover, extraction processing performed by the attribute extraction unit 212 is not limited to a specific image characteristic amount or extraction by an identification device, and it suffices that the extraction processing is processing for specifying a target attribute information. In addition, the extraction processing may use information such as temperature and distance, sensor information of a device of the target and the like.

Moreover, processing performed by the selection unit 511 is processing for selecting image capture apparatuses or videos as analysis targets, and is not limited to selection of image capture apparatuses through a user interface. For example, image capture apparatuses for which analysis is to be performed may be automatically selected from event information from a video of each image capture apparatus, the number of detected targets and the like, and image capture apparatuses for which analysis is to be performed may be selected based on output from another system.

Moreover, when calculating attribute frequency information, the analysis unit 213 may weigh the accuracy indicated by accuracy information calculated regarding attribute information and calculate the total sum. For example, if the accuracy $W(A_i, C_j, F_k)$ is weighted, an expression for calculating individual attribute frequency information regarding each image capture apparatus is as follows.

$$S(A_i, C_j, F) = \Sigma_k \{ S(A_i, C_j, F_k) \times W(A_i, C_j, F_k) \} \quad \dots \quad (5)$$

$$R(A_i, C_j, F) = S(A_i, C_j, F) / \Sigma_i \{ S(A_i, C_j, F) \} \quad \dots \quad (6)$$

In addition, overall attribute frequency information regarding selected image capture apparatuses is as follow.

$$S(A_i, C, F) = \Sigma_j \Sigma_k \{ S(A_i, C_j, F_k) \times W(A_i, C_j, F_k) \} \quad \dots \quad (7)$$

$$R(A_i, C, F) = S(A_i, C, F) / \Sigma_i \{ S(A_i, C, F) \} \quad \dots \quad (8)$$

Moreover, processing performed by the output unit 411 is processing for outputting a result of the analysis unit 213, and is not limited to display through a user interface. A method for outputting an analysis result as metadata or a method for transferring data to another system may be adopted. In this embodiment, an example has been described in which an analysis result is output as a bar graph and a pie graph, but there is no limitation to this form as long as the method enables obtained attribute frequency information to be presented to the user.

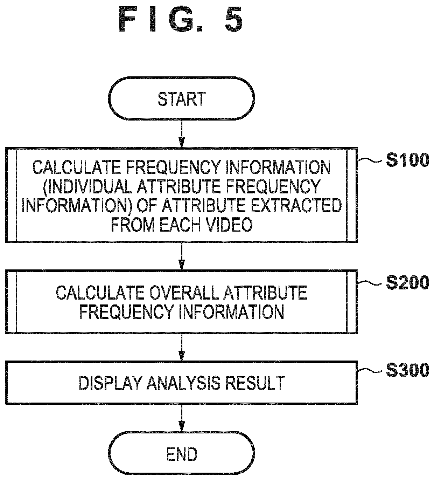

Fig. 5 is a flowchart showing processing performed by the video processing system of the first embodiment. After the processing is started, the video analysis apparatus 200 extracts an attribute from a video obtained from each image capture apparatus, calculates frequency information of the extracted attribute and obtains individual attribute frequency information (step S100). In this embodiment, the video analysis apparatus 200 obtains individual attribute frequency information using Equation 2 or Equation 6 above. Next, the video analysis apparatus 200 obtains overall attribute frequency information regarding the selected image capture apparatuses using Equation 4 or Equation 8 above (step S200). The individual attribute frequency information and the overall attribute frequency information respectively obtained in steps S100 and S200 are supplied to the output apparatus 400, and the output apparatus 400 displays the screens as described with reference to Figs. 4A and 4B based on the supplied attribute frequency information (step S300).

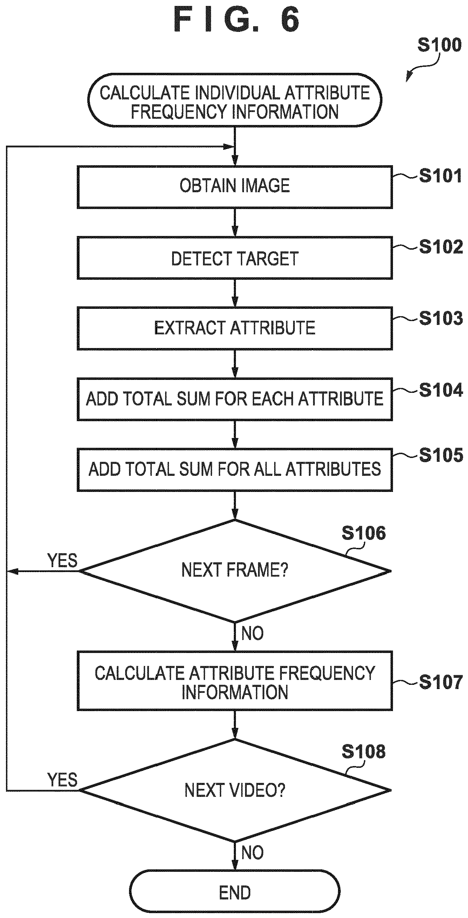

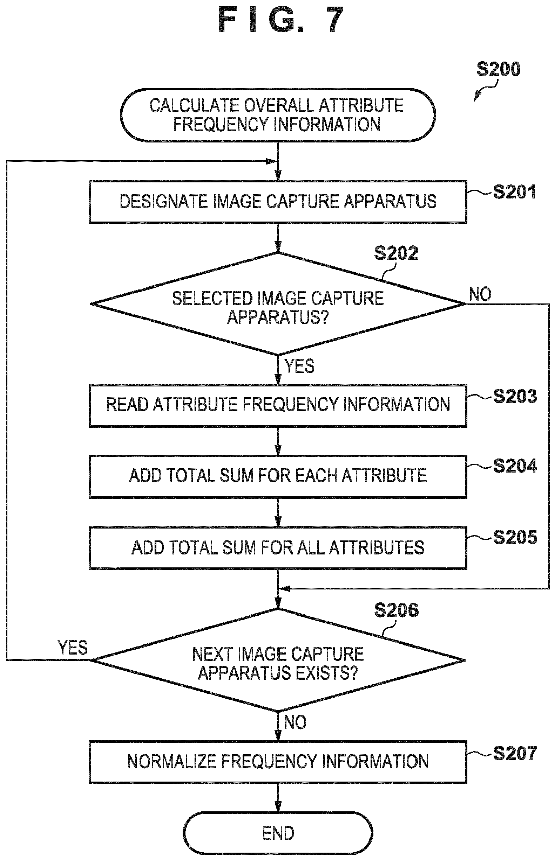

Processing for calculating the individual attribute frequency information in step S100 and processing for calculating the overall attribute frequency information in step S200 will be described below in detail with reference to the flowcharts in Figs. 6 and 7. First, the processing for calculating the individual attribute frequency information for each video (each image capture apparatus) (step S100) will be described in detail with reference to Fig. 6.

The image obtaining unit 210 obtains an image, namely, the frames of a video to be processed (the frames of a video obtained from a target image capture apparatus) (step S101), and the detection unit 211 detects a target from the obtained image (step S102). Next, the attribute extraction unit 212 extracts an attribute for each target detected in step S102 (step S103). Next, the analysis unit 213 adds the number of times that each attribute has been obtained to the total sum of the number of times of detection for each attribute (step S104), and adds the total sum of the number of times of detection of all the attributes (step S105). After that, the image obtaining unit 210 determines whether or not the next frame exists (step S106), and if it is determined that the next frame exists, the procedure returns to step S101. On the other hand, if it is determined that the next frame does not exists, the procedure advances to step S107.

As described above, the total sum ($S(A_i,C_j,F)$) of the number of times of detection for each attribute item indicated by Equation 1 is obtained in step S104 by repeating the processing of steps S102 to S105 for all the frames. In addition, the total sum ($\Sigma_i S(A_i,C_j,F)$) of the number of times of detection for all the attribute items, which serves as the denominator of Equation 2, is obtained by step S105.

When the above-described processing is complete for all the frames of the video to be processed, the analysis unit 213 calculates attribute frequency information of the target image capture apparatus from Equation 2 using the total sum of the number of times of detection obtained in step S104 and the total sum of the number of times of detection obtained in step S105 (step S107). Next, the image obtaining unit 210 determines whether or not there is a video (an image capture apparatus) that has not yet been processed (step S108). If there is no video (image capture apparatus) that has not been processed, the procedure is ended, and if there is a video (an image capture apparatus) that has not been processed, the target video (image capture apparatus) is changed, and the procedure returns to step S101. Accordingly, the individual attribute frequency information ($R(A_i,C_j,F)$) indicating the extraction frequency of each attribute ($A_i$) for each image capture apparatus ($C_j$) is obtained.

The obtained individual attribute frequency information is held in the network storage apparatus 300 in association with a corresponding image capture apparatus. In this embodiment, the total sum $S(A_i,C_j,F)$ and the attribute frequency information $R(A_i,C_j,F)$ for each attribute are held respectively in association with an image capture apparatus.

Next, the processing for calculating the overall attribute frequency information (step S200), which is attribute frequency information regarding all the selected image capture apparatuses, will be described with reference to the flowchart in Fig. 7.

The analysis unit 213 specifies one of a plurality of image capture apparatuses belonging to the video processing system (step S201), and determines whether or not the specified image capture apparatus is an image capture apparatus selected by the selection unit 511 (step S202). If it is determined that the specified image capture apparatus is a selected image capture apparatus, the analysis unit 213 reads, from the network storage apparatus 300, attribute frequency information corresponding to the specified image capture apparatus (step S203). Here, the total sum $S(A_i,C_j,F)$ for each attribute associated with the specified image capture apparatus $C_j$ is obtained.

Next, the analysis unit 213 performs addition on the total sum for each attribute read in step S203 (step S204), and also performs addition on the total sum for all the attributes (step S205). The selection unit 511 determines whether or not there is an image capture apparatus that has not been processed (step S206). If there is an image capture apparatus that has not been processed, the procedure returns to step S201, where the analysis unit 213 changes the target image capture apparatus, and repeats steps S202 to S205 above.

As a result, the analysis unit 213 obtains the total sum $S(A_i,C,F)$ of the number of times of extraction for each attribute regarding all the selected image capture apparatuses (Expression 3) by performing the processing of step S204. The analysis unit 213 also obtains the total sum ($\Sigma_i S(A_i,C,F)$) of the number of times of extraction for all the attributes regarding all the selected image capture apparatuses (denominator in Expression 4) by performing the processing of step S205.

If it is determined in step S206 that there is no image capture apparatus that has not been processed, the analysis unit 213 divides the total sum for each attribute obtained in step S204 by the total sum for all the attributes obtained in step S205 (Equation 4), and thereby obtains normalized attribute frequency information (step S207). Accordingly, overall attribute frequency information is obtained.

Note that the processing order in which attribute frequency information is collectively calculated when the video ends has been described as an example, but the timing for calculating attribute frequency information is not limited to this example. For example, calculation may be performed such that overall attribute frequency information is updated for each frame. In addition, calculation of individual attribute frequency information regarding a plurality of image capture apparatuses may be performed in parallel. Moreover, calculation of individual attribute frequency information and calculation of attribute frequency information of all the image capture apparatuses may be performed at the same time.

As described above, according to the first embodiment, frequency information of attributes (attribute frequency information) obtained from a plurality of image capture apparatuses or videos can be output and presented to the user. The user can envisage an applicable video analysis process from the presented attribute frequency information. More specifically, if the obtained attributes include many ages and genders, use of a video analysis process that mainly uses age and gender, for example, a video analysis process for counting the number of people by age or gender can be envisaged. In addition, if the amount of information regarding a mustache/beard, presence or absence of eyeglasses and an outfit is large, use of a video analysis process for searching for a person by identifying the person using such information can be envisaged output in this manner, the user can effectively select an applicable video analysis process. It is possible to reduce the burden on the user related to setting of an analysis function by statistically calculating attribute information of an object that has been obtained with a plurality of cameras and feeding back the attribute information to the user.

Second Embodiment

In a second embodiment, a configuration for displaying video analysis processes applicable to a plurality of selected image capture apparatuses based on attribute frequency information obtained in the first embodiment will be described. Configuration that differs from the first embodiment will be mainly described below.

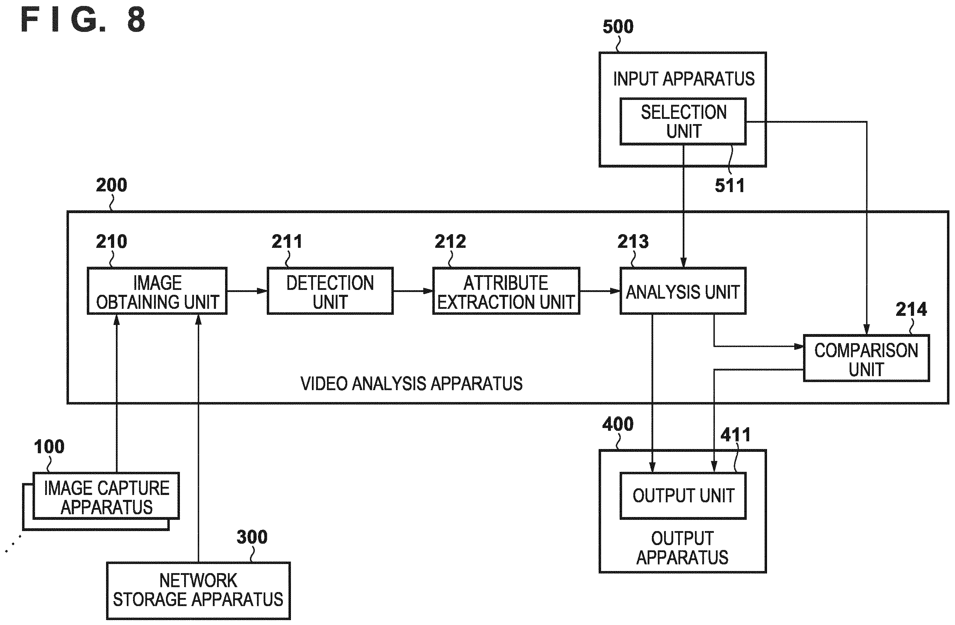

Fig. 8 is a block diagram showing an example of the functional configuration of a video processing system according to the second embodiment. Note that the configuration of the network connection of the video processing system of the second embodiment is similar to that of the first embodiment (Fig. 1). In addition, in Fig. 8, the same reference numerals are assigned to functional constituent elements that are similar to those of the first embodiment (Fig. 2). The functional constituent elements of the video processing system of the second embodiment include a comparison unit 214 in addition to the functional constituent elements of the first embodiment (Fig. 2).

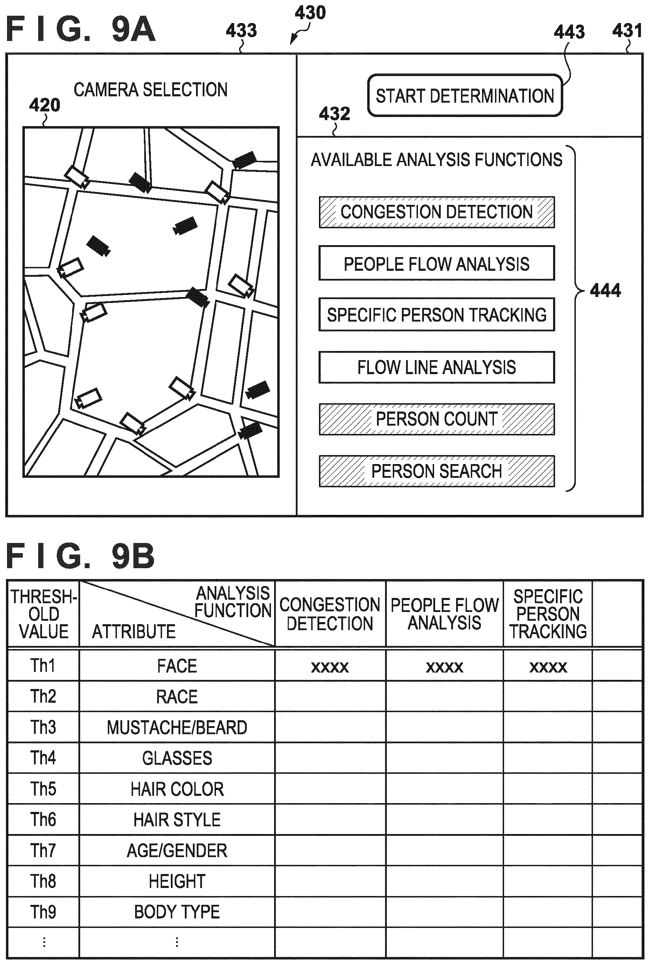

The comparison unit 214 compares an analysis result with necessary attribute data, and thereby applicable video analysis processes are obtained. After that, information (hereinafter, analysis process information) indicating the applicable video analysis processes is provided to an output unit 411. First, the necessary attribute data will be described. The necessary attribute data indicates a threshold of an extraction frequency of attribute information that is necessary for each video analysis process. Necessary attribute data Th = {$Th_1$, $Th_2$, ..., $Th_N$} collectively defines a threshold $Th_i$, and indicates necessary extraction frequency $R(A_i, C, F)$ for attribute information $A_i$. Fig. 9B is a diagram showing an example of the data configuration of the necessary attribute data. A threshold of a necessary frequency for each attribute such as "face" and "race" is recorded for each analysis function (video analysis process) such as "congestion detection" and "people flow analysis". The necessary attribute data may be stored in a storage apparatus (not illustrated) of the video analysis apparatus 200, or may be stored in the network storage apparatus 300.

Next, processing for comparing attribute frequency information with necessary attribute data performed by the comparison unit 214 will be described. In the comparison processing, an extraction frequency of each attribute is compared to threshold information of the necessary attribute data, and if overall attribute frequency information $R(A_i, C, F)$ regarding at least one or more attributes is greater than or equal to a threshold $Th_i$, it is determined that a video analysis process can be applied. This is because, if the extraction frequency $R(A_i, C, F)$ is greater than or equal to the threshold $Th_i$, attribute information necessary for the video analysis process has been obtained for a large number of people. The comparison unit 214 performs comparison processing using corresponding necessary attribute data for all the video analysis processes (analysis functions), and thereby determines whether or not each of the video analysis processes is applicable. Note that regarding an attribute unnecessary for a video analysis process, a specific value (e.g., -1) that is impossible as frequency information is recorded as a threshold, such that the above-described comparison is not performed on the unnecessary attribute.

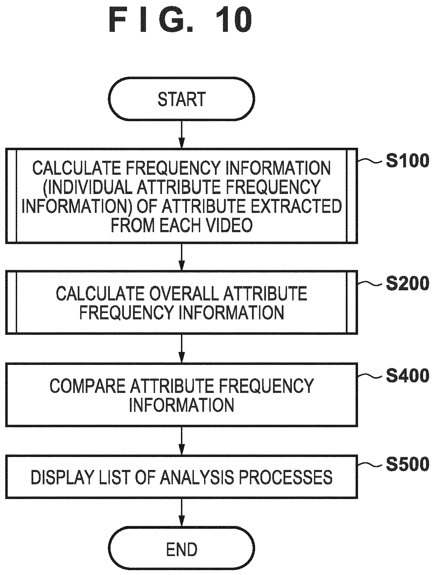

The output unit 411 displays, on a user interface, a list of applicable video analysis processes obtained by the comparison unit 214. Fig. 9A shows an example of a user interface screen 430 on which the list of applicable video analysis processes is displayed. A layout drawing 420 of image capture apparatuses is displayed in a left-side region 433 similarly to the first embodiment. In this embodiment, a determination start button 443 is displayed in an upper right region 431, and determination processing (processing that will be described later with reference to the flowchart in Fig. 10) is started by the determination start button 443 being pressed. A determination result of the determination processing is then displayed in a lower right region 432. In the lower right region 432, a list 444 of video analysis processes is displayed, and applicable video analysis processes are highlighted by black hatched lines.

Note that, in the above description, attribute frequency information for one or more attributes exceeding a threshold is set as a condition for determining that a video analysis process can be applied, but there is no limitation thereto. For example, attribute frequency information for two or more attributes exceeding a threshold may be set as a determination condition, or attribute frequency information for all the necessary attributes exceeding a threshold may be set as a determination condition. In addition, conditions that differ according to each video analysis process may be set. Moreover, comparison performed by the comparison unit 214 is not limited to comparison for determining whether or not a threshold is exceeded. For example, the comparison unit 214 compares a threshold Th = {$Th_1$, $Th_2$, ..., $Th_N$} with an attribute frequency $R(A_i, C, F)$, and if any threshold is not reached, the total sum of the difference values between thresholds and attribute frequencies is obtained. The difference value may indicate a value by which the attribute frequency is excessive or deficient relative to the threshold, or may indicate only a value by which the attribute frequency is deficient. If the total sum thereof is greater than or equal to a predetermined value, the comparison unit 214 determines that it is difficult to apply a video analysis process. Moreover, the difference value may be weighted based on the degree of importance determined for each attribute in advance. The degree of importance indicates a degree to which the attribute is necessary when using a target video analysis process.

The output unit 411 outputs a result of determination performed by the comparison unit 214, which is not limited to display through a user interface as described above. For example, the determination result may be output as metadata, or the data may be transferred to another system. In addition, in this embodiment, an example has been described in which the determination result is output as a list, but there is no limitation to this form as long as the method enables applicable video analysis processes to be presented to the user.

Fig. 10 is a flowchart showing the flow of the processing of the second embodiment. Steps S100 and S200 in Fig. 10 are as described in the first embodiment (steps S100 and S200 in Fig. 5). In step S400, the comparison unit 214 compares necessary attribute data with an analysis result (attribute frequency information). In step S500, the output unit 411 displays and clearly indicates whether or not the list 444 of video analysis processes can be applied based on the comparison result obtained in step S400, as shown in Fig. 9A.

As described above, according to the second embodiment, applicable video analysis processes can be presented to the user based on frequency information of attributes obtained from a plurality of image capture apparatuses or videos. The user can effectively select a video analysis process to be used, by checking information regarding the applicable video analysis processes.

Note that in the embodiment above, whether or not a video analysis process can be applied is determined by comparing overall attribute frequency information with necessary attribute data, but there is no limitation thereto. For example, a configuration may be adopted in which individual attribute frequency information is compared to necessary attribute data, the number of image capture apparatuses for which a video analysis process can be executed is counted, and whether or not the video analysis process can be executed is determined based on the result of the counting (e.g., based on whether or not the counted value exceeds a predetermined value). Note that an image capture apparatus for which the video analysis process can be executed is an image capture apparatus for which calculated individual attribute frequency information satisfies the frequency of a necessary attribute item.

Third Embodiment

In a third embodiment, an image capture apparatus that is not suitable for a designated video analysis process is specified out of selected image capture apparatuses, based on attribute frequency information obtained in the first embodiment, and an angle of view of the image capture apparatus is recommended or the angle of view is automatically adjusted. Differences from the first and second embodiments will be mainly described below.

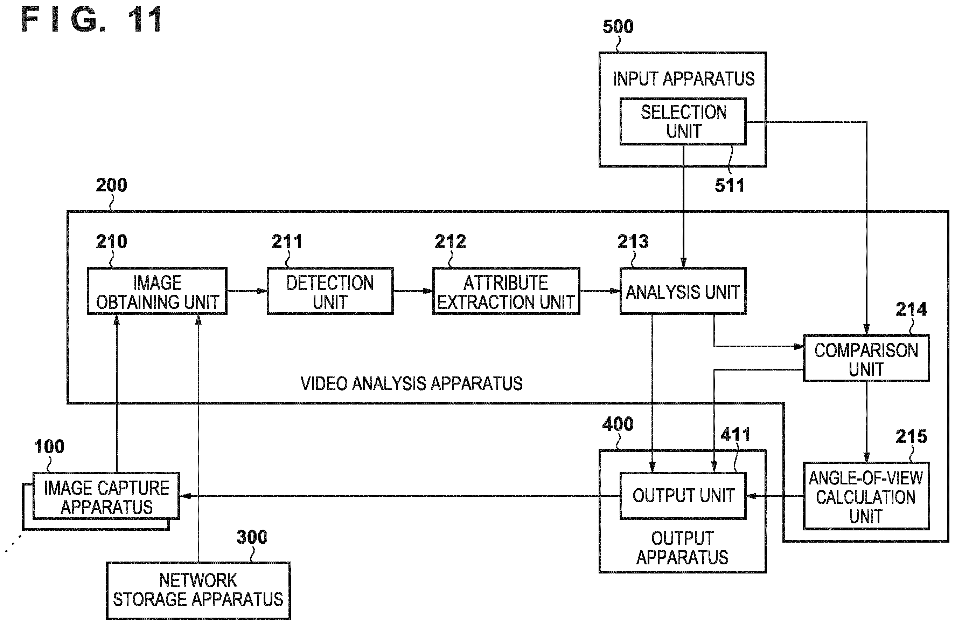

Fig. 11 is a block diagram showing an example of the functional configuration of a video processing system to which the present invention is applied. The video processing system of the third embodiment has an angle-of-view calculation unit 215 in addition to the functions described in the second embodiment.

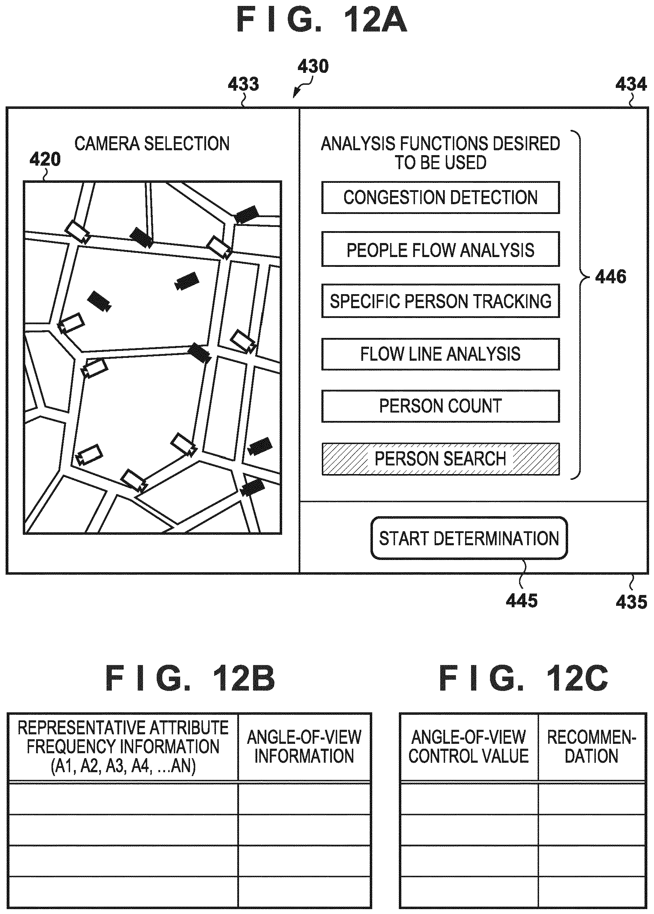

A selection unit 511 of an input apparatus 500 has a function for designating a video analysis process desired to be used, in addition to a function for selecting image capture apparatuses or videos, which was described in the first embodiment. The selection unit 511 provides information regarding the selected image capture apparatuses or videos and a video analysis process desired to be used, to an analysis unit 213 and a comparison unit 214. An example will be described in which a video analysis process desired to be used is selected on a user interface. Fig. 12A shows an example of a user interface screen 430 for selecting a video analysis process desired to be used. This user interface screen 430 is provided by cooperation of the selection unit 511 and an output unit 411. A list 446 is displayed on the user interface screen 430, and the user can designate a desired process from the video analysis processes included in the list 446. In the example in Fig. 12A, "person search process" is designated out of a plurality of video analysis processes included in the list 446 displayed in an upper right region 434, and this process is highlighted in black and displayed, making it possible to recognize that this process is in a selected state.

The comparison unit 214 compares overall attribute frequency information (calculated in step S200) with individual attribute frequency information (calculated in step S100), regarding the image capture apparatuses selected by the selection unit 511, and specifies an image capture apparatus that is unsuitable for video analysis. After that, information regarding the image capture apparatus to which it is determined to be difficult to apply the designated video analysis process is provided to the output unit 411 and the angle-of-view calculation unit 215. Note that a configuration may be adopted in which, similarly to the second embodiment, the comparison unit 214 has a function for determining applicable video analysis processes, and video analysis processes that can be designated by the user from the list 446 are restricted based on the determination result.

First, a method for specifying an image capture apparatus that is unsuitable for video analysis will be described. Fig. 13 shows an example indicating individual attribute frequency information obtained for each of selected image capture apparatuses. Attribute information obtained regarding an image capture apparatus 100a arranged lowermost in Fig. 13 deviates from attribute information regarding the surrounding image capture apparatuses. Specifically, attribute information regarding a face is obtained as a whole, but information regarding clothing and a gait is obtained from the lowermost image capture apparatus. In this case, if a video analysis process that includes processing for identifying a target among image capture apparatuses is used, non-correspondence (phenomenon in which the same target is not identified as such) may occur. This is because identification processing requires comparison of the same attribute, and for example, if clothing information is obtained from one image capture apparatus, and is not obtained from another image capture apparatus, matching processing cannot be applied. If matching processing cannot be applied, the similarity between the targets cannot be calculated, and the targets are determined to be different targets. Therefore, it is possible to determine whether or not it is difficult to apply a video analysis process to (a video of) each image capture apparatus by obtaining the degree of the deviation between the obtained individual attribute information and overall attribute information.

Comparison processing of the third embodiment performed by the comparison unit 214 will be described. In the comparison processing, similarity obtained by comparing overall attribute frequency information with individual attribute frequency information is obtained using an equation of Bhattacharyya distance. This similarity indicates a degree to which a frequency at which information of each attribute is obtained is similar among different image capture apparatuses. If the similarity between overall attribute frequency information of the image capture apparatuses selected by the selection unit 511 and individual attribute frequency information of one image capture apparatus is smaller than a predetermined threshold, it is determined to be difficult to apply a video analysis process. This is because such similarity of attribute frequency information being smaller than the threshold is the same as there being the above-described deviation in attribute frequency information obtained from different image capture apparatuses.

The angle-of-view calculation unit 215 calculates an optimum angle of view of the image capture apparatus to which it is determined to be difficult to apply a video analysis process, using attribute frequency information obtained by the analysis unit 213. The calculated optimum-angle-of-view information is then provided to the output unit 411. A method for calculating the angle of view will be described below.

Based on attribute frequency information obtained as a whole, an optimum angle of view is searched for from optimum-angle-of-view data in an angle-of-view database. Fig. 12B is a diagram showing an example of the data configuration of the angle-of-view database. Regarding each record in the angle-of-view database, representative attribute frequency information and the optimum-angle-of-view data are associated with each other. The optimum-angle-of-view data is angle-of-view information collectively including pan, tilt and zoom values of an image capture apparatus. In addition, in the database, the optimum-angle-of-view data is recorded in association with the representative attribute frequency information. For example, attribute frequency information in which an attribute frequency of a face is high is defined to be associated with information regarding an angle of view at which the zoom value is large, since the target needs to be enlarged. On the other hand, attribute frequency information in which an attribute frequency of clothing is high is defined to be associated with information regarding an angle-of-view at which the zoom value is small, since a full shot of the whole body of the target needs to be taken.

A procedure for obtaining an optimum angle of view will be described. First, similarity between attribute frequency information obtained as a whole and attribute frequency information (representative attribute frequency information in Fig. 12B) associated with the optimum-angle-of-view data in the angle-of-view database is obtained using an equation of Bhattacharyya distance. The data of an optimum angle of view at which this similarity is at a maximum is then specified, and corresponding optimum-angle-of-view information is obtained. The pan and tilt values may be obtained by being calculated from information regarding the positions at which the target is detected. For example, the average coordinate of the detection positions of the target obtained from the detection unit 211 is obtained, and the difference between the current pan and tilt values and the average coordinate is obtained as the pan and tilt values. In this case, the pan and tilt are calculated from an obtained video, and thus do not need to be included in the angle-of-view information of the optimum-angle-of-view data (therefore, in this case, it suffices that only zoom is described in the angle-of-view information).

The output unit 411 uses information, obtained by the comparison unit 214, that indicates image capture apparatuses to which it is difficult to apply a video analysis process to display, on the user interface, a list of image capture apparatuses to which it is difficult to apply a video analysis process. Furthermore, the output unit 411 recommends an angle of view and automatically adjusts the angle of view of the image capture apparatus 100, using the optimum-angle-of-view information obtained from the angle-of-view calculation unit 215.

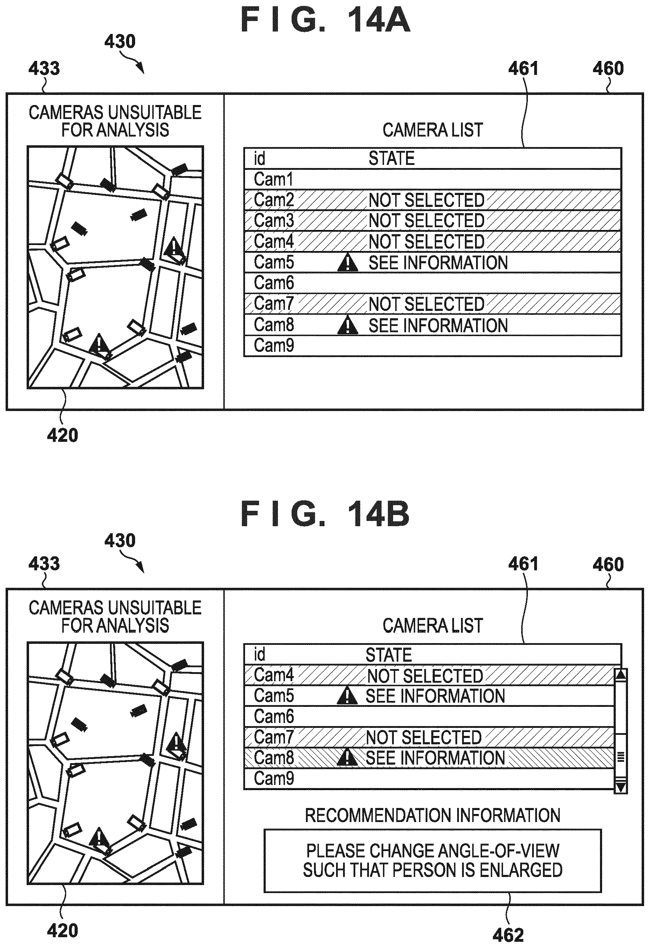

First, display of information regarding image capture apparatuses to which it is difficult to apply a video analysis process performed by the output unit 411 will be described. Fig. 14A shows an example of the user interface screen 430 on which a list of image capture apparatuses to which it is difficult to apply a video analysis process is displayed. The output unit 411 displays a list 461 of the image capture apparatuses in a right-side region 460 of the user interface screen, and highlights and displays, using a mark, the image capture apparatuses to which it is difficult to apply a video analysis process. In addition, the output unit 411 superimposes and displays a predetermined mark on the image capture apparatuses to which it is difficult to apply a video analysis process, in a layout drawing 420 of the image capture apparatuses displayed in the left-side region 433.

Next, angle of view recommendation display regarding an image capture apparatus to which it is difficult to apply a video analysis process will be described. Fig. 14B shows an example of displaying, on the user interface screen 430, a recommendation display 462 in which recommendation information into which optimum-angle-of-view information has been converted is displayed, as well as display of the list 461 of the image capture apparatuses. The recommendation information is information regarding the setting that is to be made by the user in order to change the setting of the image capture apparatus from the current angle of view to an optimum angle of view, and this information has been put into sentences. Examples of the recommendation information include sentences such as "Please zoom in more" and "Please pan the camera 30 degrees to the right". The recommendation information is held in association with representative control values (angle-of-view control values) regarding the pan, tilt and zoom, as shown in Fig. 12C.

Conversion from optimum-angle-of-view information into recommendation information will be described. First, the difference value between the current angle of view of the image capture apparatus 100 that is unsuitable for the designated analysis process and the optimum angle of view obtained by the angle-of-view calculation unit 215 is calculated. This difference value is used as a control value to search for recommendation information based on a difference value associated with the recommendation information. Fig. 12C is a diagram showing a registration example of the recommendation information, and the recommendation information (sentences to be displayed on the recommendation display 462) is registered according to the angle-of-view (pan/tilt/zoom) control values. The output unit 411 searches the recommendation information registered as in Fig. 12C for an "angle-of-view control value" corresponding to the above-described difference, and obtains recommendation information associated with the angle-of-view control value. For example, if the zoom value difference between the current angle of view of the image capture apparatus and the optimum angle of view is large, recommendation information indicating that a further zoom operation needs to be performed on the object is extracted. In Fig. 14B, the recommendation display 462 for obtaining an optimum angle of view regarding Cam 8 selected from the list 461 is displayed.

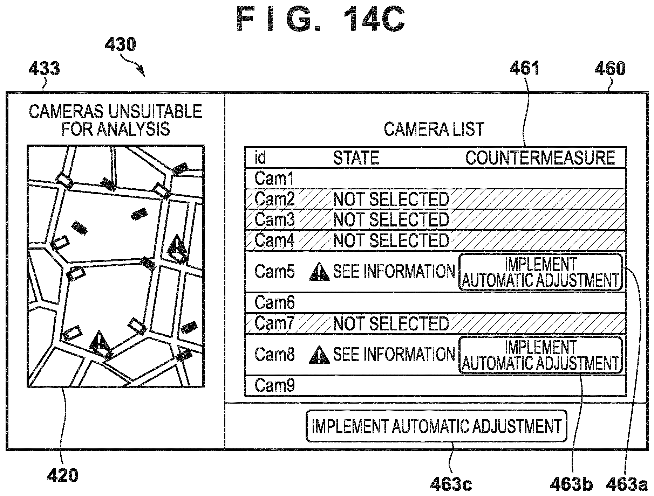

Next, an example will be described in which an angle of view is automatically adjusted. Fig. 14C shows an example of the user interface screen 430 for the output unit 411 to automatically adjust the angle of view of the image capture apparatus 100 using the optimum angle of view obtained by the angle-of-view calculation unit 215. Regarding the image capture apparatus for which the optimum angle of view has been obtained, optimum-angle-of-view information is transmitted to the target image capture apparatus by automatic adjustment execution buttons 463a-463c in the right-side region 460 on the screen being pressed, and the angle of view of the image capture apparatus is automatically adjusted. When the automatic adjustment execution button 463a is pressed, adjustment for the angle of view of Cam 5 is executed. When the automatic adjustment execution button 463b is pressed, adjustment for the angle of view of Cam 8 is executed. When the automatic adjustment execution button 463c is pressed, adjustments for the angle of views of Cam 5 and Cam 8 are executed. Note that the angle of view of the image capture apparatus may be automatically adjusted by providing the obtained optimum-angle-of-view information to the image capture apparatus 100 without input from the user (without the automatic adjustment execution button 463 being pressed).

The processing performed by the output unit 411 is processing for outputting a result of determination performed by the comparison unit 214, and is not limited to display on a user interface screen. For example, a method for outputting a result as metadata, and a method for transferring the data to another system may be adopted. Moreover, in this embodiment, an example has been described in which a determination result is output as a list, but there is no limitation to this form as long as the method enables a list of image capture apparatuses to which it is difficult to apply video analysis to be presented to the user.

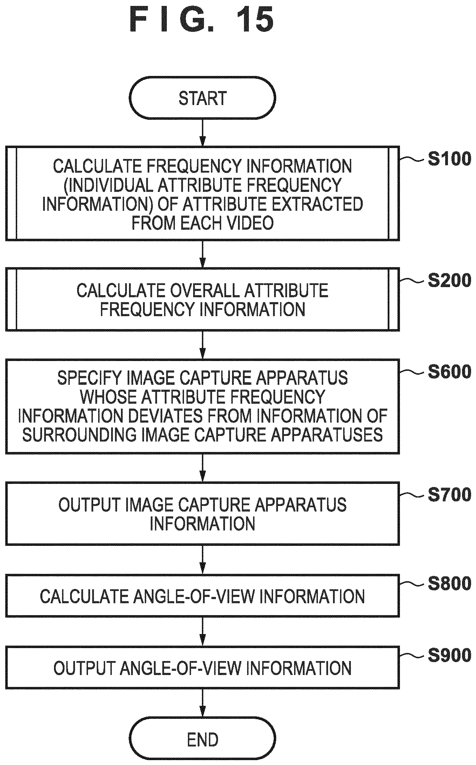

Fig. 15 is a flowchart showing the flow of the processing according to the third embodiment. The processing of steps S100 and S200 in Fig. 15 is similar to the processing of the first embodiment. The comparison unit 214 compares overall attribute frequency information obtained from a plurality of image capture apparatuses in step S200 with individual attribute frequency information of a target image capture apparatus obtained in step S100, and specifies image capture apparatuses to which it is difficult to apply a video analysis process (step S600). The output unit 411 then displays the list 461 of the image capture apparatuses to which it is difficult to apply a video analysis process (step S700). The angle-of-view calculation unit 215 calculates an optimum angle of view regarding the image capture apparatus specified in step S600 (step S800), and the output unit 411 displays optimum-angle-of-view information as the recommendation display 462 (step S900). Alternatively, in place of (or in addition to) display of recommendation information, the output unit 411 executes adjustment of the angle of view of the image capture apparatus specified in step S600 based on the optimum-angle-of-view information (in response to the automatic adjustment execution button 463 being pressed).

As described above, according to the third embodiment, information regarding an image capture apparatus to which it is difficult to apply a video analysis process can be output based on frequency information of attributes obtained from a plurality of image capture apparatuses or videos. Because information regarding an image capture apparatus to which it is difficult to apply a video analysis process is presented to the user, the user can easily notice the image capture apparatus whose angle of view needs to be adjusted. Alternatively, an image capture apparatus to which it is difficult to apply a video analysis process is automatically adjusted to have an appropriate angle of view. Accordingly, it is possible to reduce the burden when adjusting the angle of view of each image capture apparatus in order to perform a video analysis process.

Note that, in the first to third embodiments above, the analysis unit 213 calculates overall attribute frequency information from image capture apparatuses selected by the user, as described with reference to Figs. 3A and 3B, but the present invention is not limited thereto. For example, the analysis unit 213 may calculate attribute frequency information using, as comparison targets, a plurality of surrounding one image capture apparatuses that are within a certain distance from the one image capture apparatus. In this case, overall attribute frequency information will be calculated based on videos obtained from the surrounding image capture apparatuses that are within the certain distance from the image capture apparatus. In addition, in this case, the comparison unit 214 of the third embodiment compares individual attribute frequency information obtained from one image capture apparatus with attribute frequency information of the comparison targets obtained by the analysis unit 213. Moreover, it suffices that a method for determining image capture apparatuses serving as comparison targets is a method that is based on information indicating the connection between the cameras, and is not limited to the method that is based on distance as above-described. For example, image capture apparatuses within an area divided in advance may be determined to be comparison targets. Moreover, attribute frequency information corresponding to each image capture apparatus may be weighted based on information such as distance.

Moreover, it suffices that the processing performed by the angle-of-view calculation unit 215 is processing for obtaining an optimum angle of view based on a comparison result and attribute frequency information, and is not limited to a method that is based on comparison with a database as described above. For example, a mathematical function for obtaining an angle of view based on attribute frequency information may be defined and used.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

A video processing apparatus obtains videos obtained from a plurality of image capture apparatuses, and extracts a predetermined attribute from the obtained videos. The video processing apparatus calculates individual attribute frequency information indicating a frequency at which an attribute has been extracted for a video obtained by each of a plurality of image capture apparatuses and overall attribute frequency information indicating a frequency at which an attribute has been extracted for a plurality of videos obtained by a plurality of image capture apparatuses, and outputs the individual attribute frequency information and the overall attribute frequency information.

**Claims**

1. A video processing apparatus comprising:

   obtaining means (210) for obtaining videos obtained from a plurality of image capture apparatuses;
   extraction means (211, 212) for extracting a predetermined attribute from the videos obtained by the obtaining means;
   analysis means (213) for calculating individual attribute frequency information indicating a frequency at which the attribute has been extracted by the extraction means for a video obtained by each of the image capture apparatuses and overall attribute frequency information indicating a frequency at which the attribute has been extracted by the extraction means for a plurality of videos obtained by the image capture apparatuses; and
   output means (1605, 400, 411) for outputting the individual attribute frequency information and the overall attribute frequency information.

2. The apparatus according to claim 1,
   wherein the output means has presentation means for presenting the individual attribute frequency information and the overall attribute frequency information to a user, and
   the presentation means:

   presents a layout drawing indicating a layout of the image capture apparatuses, and

presents the individual attribute frequency information obtained by the analysis means for the image capture apparatuses designated in the layout drawing.

3. The apparatus according to claim 1,
wherein the output means has presentation means for presenting the individual attribute frequency information and the overall attribute frequency information to a user, and
the presentation means:

presents a layout drawing indicating a layout of the image capture apparatuses, and
superimposes and displays the individual attribute frequency information at a position of each image capture apparatus in the layout drawing.

4. A video processing apparatus comprising:

obtaining means (210) for obtaining videos obtained from a plurality of image capture apparatuses;
extraction means (211, 212) for extracting a predetermined attribute from the videos obtained by the obtaining means;
analysis means (213) for calculating at least one of individual attribute frequency information indicating a frequency at which the attribute has been extracted by the extraction means for a video obtained by each of the image capture apparatuses and overall attribute frequency information indicating a frequency at which the attribute has been extracted by the extraction means for a plurality of videos obtained by the image capture apparatuses; and
determination means (214) for determining an applicable video analysis process out of a plurality of video analysis processes, based on at least one of the individual attribute frequency information and the overall attribute frequency information.

5. The apparatus according to claim 4,
wherein the determination means determines an applicable video analysis process by comparing the overall attribute frequency information with necessary attribute data including a necessary attribute item and a frequency thereof regarding each of the video analysis processes.

6. The apparatus according to claim 4,
wherein the determination means counts the number of image capture apparatuses for which individual attribute frequency information that satisfies a frequency of necessary attribute item has been obtained, regarding each of the video analysis processes, and determines an applicable video analysis process based on a result of the counting.

7. The apparatus according to any one of claims 4 to 6, further comprising:

presentation means for presenting, to a user, a video analysis process determined to be applicable by the determination means.

8. A video processing apparatus comprising:

obtaining means (210) for obtaining videos obtained from a plurality of image capture apparatuses;
extraction means (211, 212) for extracting a predetermined attribute from the videos obtained by the obtaining means;
analysis means (213) for calculating individual attribute frequency information indicating a frequency at which the attribute has been extracted by the extraction means for a video obtained by each of the image capture apparatuses and overall attribute frequency information indicating a frequency at which the attribute has been extracted by the extraction means for a plurality of videos obtained by the image capture apparatuses; and
determination means (214) for determining an image capture apparatus corresponding to individual attribute frequency information whose similarity to the overall attribute frequency information is smaller than a predetermined value, as an image capture apparatus that is unsuitable for execution of a video analysis process.

9. The apparatus according to claim 8,
wherein the apparatus has angle-of-view data in which representative attribute frequency information and angle-of-view information are associated with each other, and
the apparatus further comprises angle-of-view obtaining means (215) for obtaining an angle of view to be set for the image capture apparatus determined to be unsuitable for execution of the video analysis process, based on the angle-of-view information that is associated with the representative attribute information having the largest similarity to the overall attribute frequency information.

10. The apparatus according to claim 9, further comprising:

presentation means for presenting a recommendation regarding adjustment of an angle of view of the image capture apparatus, based on a difference between the angle of view obtained by the angle-of-view obtaining means and the angle of view of the image capture apparatus determined to be unsuitable for the execution of the video analysis process.

11. The apparatus according to claim 9, further comprising:

adjustment means for adjusting the angle of view of the image capture apparatus, based on the angle of view obtained by the angle-of-view obtaining means and the angle of view of the image capture apparatus determined to be unsuitable for the execution of the video analysis process.

12. The apparatus according to any one of claims 8 to 11, further comprising:

designation means for determining applicable video analysis processes out of a plurality of video analysis processes, based on the individual attribute frequency information or the overall attribute frequency information, and prompting a user to designate a video analysis process out of the video analysis processes determined to be applicable,
wherein the determination means determines an image capture apparatus that is unsuitable for execution of the video analysis process designated in the designation means as an image capture apparatus that is unsuitable for execution of a video analysis process.

13. The apparatus according to any one of claims 1 to 12, further comprising:

selection means for selecting an image capture apparatus for which analysis is to be performed,
wherein the image capture apparatuses are constituted by image capture apparatuses selected by the selection means.

14. The apparatus according to any one of claims 1 to 13,
wherein the analysis means calculates the individual attribute frequency information and the overall attribute frequency information using, as a weight, accuracy information obtained when the extraction means extracts an attribute from video.

15. A control method of a video processing apparatus, the method comprising the steps of:

obtaining (S101) videos obtained from a plurality of image capture apparatuses;
extracting (S103) a predetermined attribute from the videos obtained in the obtaining;
calculating (S100, S200) individual attribute frequency information indicating a frequency at which the attribute has been extracted in the extracting for a video obtained by each of the image capture apparatuses and overall attribute frequency information indicating a frequency at which the attribute has been extracted in the extracting for a plurality of videos obtained by the image capture apparatuses; and
outputting (S300) the individual attribute frequency information and the overall attribute frequency information.

16. A control method of a video processing apparatus, the method comprising the steps of:

obtaining (S101) videos obtained from a plurality of image capture apparatuses;
extracting (S103) a predetermined attribute from the videos obtained in the obtaining;
calculating (S100, S200) at least one of individual attribute frequency information indicating a frequency at which the attribute has been extracted in the extracting for a video obtained by each of the image capture apparatuses and overall attribute frequency information indicating a frequency at which the attribute has been extracted in the extracting for a plurality of videos obtained by the image capture apparatuses; and
determining (S400, S500) an applicable video analysis process out of a plurality of video analysis processes based on at least one of the individual attribute frequency information and the overall attribute frequency infor-

**EP 3 223 192 A2**

mation.

17. A control method of a video processing apparatus, the method comprising the steps of:

obtaining (S101) videos obtained from a plurality of image capture apparatuses;
extracting (S103) a predetermined attribute from the videos obtained in the obtaining;
calculating (S100, S200) individual attribute frequency information indicating a frequency at which the attribute has been extracted in the extracting for a video obtained by each of the image capture apparatuses and overall attribute frequency information indicating a frequency at which the attribute has been extracted in the extracting for a plurality of videos obtained by the image capture apparatuses; and
determining (S600, S700) an image capture apparatus corresponding to individual attribute frequency information whose similarity to the overall attribute frequency information is smaller than a predetermined value, as an image capture apparatus that is unsuitable for execution of a video analysis process.

18. A computer program for causing a computer to execute the control method according to any one of claims 15 to 17.

# F I G. 1

LAN

100 — IMAGE CAPTURE APPARATUS

~600

100 — IMAGE CAPTURE APPARATUS

100 — IMAGE CAPTURE APPARATUS

NETWORK STORAGE APPARATUS — 300

200 — VIDEO ANALYSIS APPARATUS

OUTPUT APPARATUS — 400

INPUT APPARATUS — 500

# F I G. 2

INPUT APPARATUS 500

SELECTION UNIT 511

VIDEO ANALYSIS APPARATUS 200

IMAGE OBTAINING UNIT 210

DETECTION UNIT 211

ATTRIBUTE EXTRACTION UNIT 212

ANALYSIS UNIT 213

IMAGE CAPTURE APPARATUS 100

NETWORK STORAGE APPARATUS 300

OUTPUT APPARATUS 400

OUTPUT UNIT 411

EP 3 223 192 A2

# F I G. 3A

# F I G. 3B

# F I G. 3C

| ATTRIBUTE | FREQUENCY |
|---|---|
| FACE | |
| RACE | |
| MUSTACHE/BEARD | |
| GLASSES | |
| HAIR COLOR | |
| HAIR STYLE | |
| AGE/GENDER | |
| HEIGHT | |
| BODY TYPE | |
| CLOTHING COLOR | |
| CLOTHING | |
| BAG | |
| GAIT | |

# F I G. 3D

FACE
RACE
MUSTACHE/BEARD
GLASSES
HAIR COLOR
HAIR STYLE
AGE/GENDER
HEIGHT

# F I G. 4A

CAMERA SELECTION

START ANALYSIS

ANALYSIS RESULT

FACE
RACE
MUSTACHE/BEARD
GLASSES
HAIR COLOR
HAIR STYLE
AGE/GENDER
HEIGHT
BODY TYPE
CLOTHING COLOR
CLOTHING
BAG
GAIT

FACE
RACE
MUSTACHE/BEARD
GLASSES
HAIR COLOR
HAIR STYLE
AGE/GENDER
HEIGHT

# F I G. 4B

DETAILED RESULT

START ANALYSIS

433  430  441  431

432  442

ANALYSIS RESULT

420

FACE
RACE
MUSTACHE/BEARD
GLASSES
HAIR COLOR
HAIR STYLE
AGE/GENDER
HEIGHT
BODY TYPE
CLOTHING COLOR
CLOTHING
BAG
GAIT

FACE
RACE
MUSTACHE/BEARD
GLASSES
HAIR COLOR
HAIR STYLE
AGE/GENDER
HEIGHT

# F I G. 5

```
        ┌─────────────┐
        │    START    │
        └──────┬──────┘
               │
               ▼
  ╔═══════════════════════════════╗
  ║ CALCULATE FREQUENCY INFORMATION║  ~S100
  ║ (INDIVIDUAL ATTRIBUTE FREQUENCY║
  ║ INFORMATION) OF ATTRIBUTE      ║
  ║ EXTRACTED FROM EACH VIDEO      ║
  ╚═══════════════╤═══════════════╝
                  │
                  ▼
  ╔═══════════════════════════════╗
  ║   CALCULATE OVERALL ATTRIBUTE  ║  ~S200
  ║     FREQUENCY INFORMATION      ║
  ╚═══════════════╤═══════════════╝
                  │
                  ▼
  ┌───────────────────────────────┐
  │     DISPLAY ANALYSIS RESULT    │  ~S300
  └───────────────┬───────────────┘
                  │
                  ▼
        ┌─────────────┐
        │     END     │
        └─────────────┘
```

# F I G. 6

S100

CALCULATE INDIVIDUAL ATTRIBUTE FREQUENCY INFORMATION

OBTAIN IMAGE — S101

DETECT TARGET — S102

EXTRACT ATTRIBUTE — S103

ADD TOTAL SUM FOR EACH ATTRIBUTE — S104

ADD TOTAL SUM FOR ALL ATTRIBUTES — S105

NEXT FRAME? — S106
YES
NO

CALCULATE ATTRIBUTE FREQUENCY INFORMATION — S107

NEXT VIDEO? — S108
YES
NO

END

# F I G. 7

S200

CALCULATE OVERALL ATTRIBUTE
FREQUENCY INFORMATION

DESIGNATE IMAGE CAPTURE APPARATUS — S201

SELECTED IMAGE CAPTURE
APPARATUS? — S202

NO

YES

READ ATTRIBUTE FREQUENCY INFORMATION — S203

ADD TOTAL SUM FOR EACH ATTRIBUTE — S204

ADD TOTAL SUM FOR ALL ATTRIBUTES — S205

NEXT IMAGE CAPTURE
APPARATUS EXISTS? — S206

YES

NO

NORMALIZE FREQUENCY INFORMATION — S207

END

24

# FIG. 8

EP 3 223 192 A2

# FIG. 9A

433 430 443 431

CAMERA SELECTION

420

START DETERMINATION

432

AVAILABLE ANALYSIS FUNCTIONS

CONGESTION DETECTION

PEOPLE FLOW ANALYSIS

SPECIFIC PERSON TRACKING

FLOW LINE ANALYSIS

PERSON COUNT

PERSON SEARCH

444

# FIG. 9B

| THRESH-OLD VALUE | ATTRIBUTE / ANALYSIS FUNCTION | CONGESTION DETECTION | PEOPLE FLOW ANALYSIS | SPECIFIC PERSON TRACKING | |
|---|---|---|---|---|---|
| Th1 | FACE | xxxx | xxxx | xxxx | |
| Th2 | RACE | | | | |
| Th3 | MUSTACHE/BEARD | | | | |
| Th4 | GLASSES | | | | |
| Th5 | HAIR COLOR | | | | |
| Th6 | HAIR STYLE | | | | |
| Th7 | AGE/GENDER | | | | |
| Th8 | HEIGHT | | | | |
| Th9 | BODY TYPE | | | | |
| ⋮ | ⋮ | | | | |

# F I G. 10

```
                    ┌─────────────┐
                    │    START    │
                    └──────┬──────┘
                           │
                           ▼
      ╔═══════════════════════════════════════╗
      ║  CALCULATE FREQUENCY INFORMATION      ║ ～ S100
      ║  (INDIVIDUAL ATTRIBUTE FREQUENCY      ║
      ║  INFORMATION) OF ATTRIBUTE EXTRACTED  ║
      ║         FROM EACH VIDEO               ║
      ╚═══════════════════╤═══════════════════╝
                          │
                          ▼
      ╔═══════════════════════════════════════╗
      ║   CALCULATE OVERALL ATTRIBUTE         ║ ～ S200
      ║      FREQUENCY INFORMATION            ║
      ╚═══════════════════╤═══════════════════╝
                          │
                          ▼
      ┌───────────────────────────────────────┐
      │   COMPARE ATTRIBUTE FREQUENCY         │ ～ S400
      │         INFORMATION                   │
      └───────────────────┬───────────────────┘
                          │
                          ▼
      ┌───────────────────────────────────────┐
      │  DISPLAY LIST OF ANALYSIS PROCESSES   │ ～ S500
      └───────────────────┬───────────────────┘
                          │
                          ▼
                   ┌─────────────┐
                   │     END     │
                   └─────────────┘
```

# FIG. 11

**500** INPUT APPARATUS
- **511** SELECTION UNIT

**200** VIDEO ANALYSIS APPARATUS
- **210** IMAGE OBTAINING UNIT
- **211** DETECTION UNIT
- **212** ATTRIBUTE EXTRACTION UNIT
- **213** ANALYSIS UNIT
- **214** COMPARISON UNIT
- **215** ANGLE-OF-VIEW CALCULATION UNIT

**100** IMAGE CAPTURE APPARATUS

**300** NETWORK STORAGE APPARATUS

**400** OUTPUT APPARATUS
- **411** OUTPUT UNIT

EP 3 223 192 A2

EP 3 223 192 A2

# F I G. 12A

CAMERA SELECTION

ANALYSIS FUNCTIONS DESIRED TO BE USED

CONGESTION DETECTION

PEOPLE FLOW ANALYSIS

SPECIFIC PERSON TRACKING

FLOW LINE ANALYSIS

PERSON COUNT

PERSON SEARCH

START DETERMINATION

# F I G. 12B

| REPRESENTATIVE ATTRIBUTE FREQUENCY INFORMATION (A1, A2, A3, A4, ...AN) | ANGLE-OF-VIEW INFORMATION |
|---|---|
| | |
| | |
| | |
| | |

# F I G. 12C

| ANGLE-OF-VIEW CONTROL VALUE | RECOMMEN- DATION |
|---|---|
| | |
| | |
| | |
| | |

29

# FIG. 13

FACE
MUSTACHE/BEARD
HAIR STYLE
AGE
BODY TYPE
CLOTHING
GAIT

FACE
MUSTACHE/BEARD
HAIR STYLE
AGE
BODY TYPE
CLOTHING
GAIT

FACE
MUSTACHE/BEARD
HAIR STYLE
AGE
BODY TYPE
CLOTHING
GAIT

100a

FACE
MUSTACHE/BEARD
HAIR STYLE
AGE
BODY TYPE
CLOTHING
GAIT

# F I G. 14A

430
433
461 460

| CAMERAS UNSUITABLE FOR ANALYSIS | CAMERA LIST | |
| --- | --- | --- |
| | id | STATE |
| | Cam1 | |
| | Cam2 | NOT SELECTED |
| | Cam3 | NOT SELECTED |
| | Cam4 | NOT SELECTED |
| | Cam5 | ⚠ SEE INFORMATION |
| | Cam6 | |
| | Cam7 | NOT SELECTED |
| | Cam8 | ⚠ SEE INFORMATION |
| | Cam9 | |

420

# F I G. 14B

430
433
461 460

| CAMERAS UNSUITABLE FOR ANALYSIS | CAMERA LIST | |
| --- | --- | --- |
| | id | STATE |
| | Cam4 | NOT SELECTED |
| | Cam5 | ⚠ SEE INFORMATION |
| | Cam6 | |
| | Cam7 | NOT SELECTED |
| | Cam8 | ⚠ SEE INFORMATION |
| | Cam9 | |

RECOMMENDATION INFORMATION

PLEASE CHANGE ANGLE-OF-VIEW
SUCH THAT PERSON IS ENLARGED

420
462

# F I G. 14C

**430**

**433**   **461**   **460**

| CAMERAS UNSUITABLE FOR ANALYSIS |
|---|

**420**

## CAMERA LIST

| id | STATE | COUNTERMEASURE |
|---|---|---|
| Cam1 | | |
| Cam2 | NOT SELECTED | |
| Cam3 | NOT SELECTED | |
| Cam4 | NOT SELECTED | |
| Cam5 | ⚠ SEE INFORMATION | IMPLEMENT AUTOMATIC ADJUSTMENT |
| Cam6 | | |
| Cam7 | NOT SELECTED | |
| Cam8 | ⚠ SEE INFORMATION | IMPLEMENT AUTOMATIC ADJUSTMENT |
| Cam9 | | |

| IMPLEMENT AUTOMATIC ADJUSTMENT |
|---|

**463c**   **463b  463a**

# F I G. 15

```
        ┌─────────────┐
        │    START    │
        └─────────────┘
               │
               ▼
┌──────────────────────────────────┐  S100
│   CALCULATE FREQUENCY INFORMATION │
│   (INDIVIDUAL ATTRIBUTE FREQUENCY │
│  INFORMATION) OF ATTRIBUTE EXTRACTED│
│         FROM EACH VIDEO           │
└──────────────────────────────────┘
               │
               ▼
┌──────────────────────────────────┐  S200
│    CALCULATE OVERALL ATTRIBUTE    │
│       FREQUENCY INFORMATION       │
└──────────────────────────────────┘
               │
               ▼
┌──────────────────────────────────┐  S600
│    SPECIFY IMAGE CAPTURE APPARATUS│
│      WHOSE ATTRIBUTE FREQUENCY    │
│ INFORMATION DEVIATES FROM INFORMATION OF│
│ SURROUNDING IMAGE CAPTURE APPARATUSES│
└──────────────────────────────────┘
               │
               ▼
┌──────────────────────────────────┐  S700
│    OUTPUT IMAGE CAPTURE APPARATUS │
│            INFORMATION            │
└──────────────────────────────────┘
               │
               ▼
┌──────────────────────────────────┐  S800
│   CALCULATE ANGLE-OF-VIEW INFORMATION│
└──────────────────────────────────┘
               │
               ▼
┌──────────────────────────────────┐  S900
│    OUTPUT ANGLE-OF-VIEW INFORMATION│
└──────────────────────────────────┘
               │
               ▼
        ┌─────────────┐
        │     END     │
        └─────────────┘
```

# F I G. 16

**1600**

**1601** CPU

**1602** ROM

**1603** RAM

**1606**

**1604**

**1605** N-I/F

VIDEO PROCESSING APPARATUS

**600** LAN

**1620**

**1621** CPU

**1622** ROM

**1623** RAM

**1627** N-I/F

**1628**

**1624**

**1625** DISPLAY

**1626** INPUT DEVICE

INFORMATION PROCESSING APPARATUS

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012252507 A

- JP 2014064083 A

### Non-patent literature cited in the description

- **DALAL ; TRIGGS.** Histograms of Oriented Gradients for Human Detection. *Proceedings of the IEEE Conference on Computer Vision and Pattern Recognition,* 2005

- **X ZHU ; D RAMANAN.** Face detection, pose estimation, and landmark localization in the wild. *Computer Vision and Pattern Recognition (CVPR),* 2012
- **BENFOLD, B.** Stable multi-target tracking in real-time surveillance video. *Computer Vision and Pattern Recognition (CVPR),* 2011